# EUROPEAN PATENT SPECIFICATION

(11) **EP 3 517 370 B1**
(45) Date of publication and mention of the grant of the patent: **22.04.2020**
(21) Application number: 17852623.2
(22) Date of filing: 07.06.2017
(51) Int. Cl.: B60R 21/00, B62D 15/02

(54) **DISPLAY CONTROL DEVICE, DISPLAY CONTROL METHOD, AND PROGRAM**
ANZEIGESTEUERUNGSVORRICHTUNG, ANZEIGESTEUERUNGSVERFAHREN UND PROGRAMM
DISPOSITIF DE COMMANDE D'AFFICHAGE, PROCÉDÉ DE COMMANDE D'AFFICHAGE ET PROGRAMME

(30) Priority: 26.09.2016 JP 2016186588; 24.04.2017 JP 2017085243
(43) Date of publication of application: 31.07.2019
(73) Proprietor: JVC Kenwood Corporation, Yokohama-shi, Kanagawa 221-0022 (JP)
(72) Inventor: MATSUMOTO Hideyuki, Yokohama-shi Kanagawa 221-0022 (JP); OBA Mitsugu, Yokohama-shi Kanagawa 221-0022 (JP)
(74) Representative: Potter Clarkson
(86) International application number: PCT/JP2017/021218
(87) International publication number: WO 2018/055842

(56) References cited:
- EP-A1- 1 707 474
- WO-A1-2012/102391
- JP-A- 2001 180 403
- JP-A- 2004 276 807
- JP-A- 2006 272 990
- JP-A- 2007 226 300
- JP-A- 2008 120 293
- JP-A- 2008 132 882
- JP-A- 2011 255 812
- US-A1- 2008 158 011

## Description

### Technical Field

The present disclosure relates to a display control apparatus, a display control method, and a program.

### Background Art

In recent years, techniques for causing a display unit such a monitor to display back-side video images captured by a rear camera installed in a rear part of a vehicle when, for example, the vehicle travels backward have become widespread (Patent Literature 1 and 2). In an apparatus disclosed in Patent Literature 1, predicted track lines are displayed on a display unit. Further, in Patent Literature 1, a display form of the predicted track line on a front side and that on a deep side are changed from each other. Specifically, the front side of the predicted track line is displayed by a thick solid line and the deep side of the predicted track line is displayed by a broken line, a light-colored line, or a translucent line. In an apparatus disclosed in Patent Literature 2, travel track lines are displayed on a display unit. In Patent Literature 2, when the travel track line and an obstacle overlap each other, a part of the travel track line that overlaps the obstacle is deleted.

### Citation List

### Patent Literature

[Patent Literature 1] Japanese Unexamined Patent Application Publication No. 2010-100267
[Patent Literature 2] Japanese Unexamined Patent Application Publication No. 2007-43530

EP 1707474 discloses a display control aparatus according to the preamble of claim 1.

### Summary of Invention

However, in the apparatuses disclosed in Patent Literature 1 and 2, it is difficult for the driver to recognize whether the travelling speed at the time of parking is appropriate.

In view of the aforementioned problem, this embodiment aims to provide a display control apparatus, a display control method, and a program capable of causing a driver to recognize whether the travelling speed at the time of parking is appropriate.

A display control apparatus according to the invention is reflected in claim 1.

A display control method according to the invention is reflected in claim 7.

A program according to the invention is reflected in claim 8.

According to this invention, it is possible to provide a display control apparatus, a display control method, and a program capable of causing a driver to recognize whether the travelling speed at the time of parking is appropriate.

### Brief Description of Drawings

Fig. 1 is a diagram showing a vehicle according to a first embodiment;
Fig. 2 is a diagram showing an internal part of the vehicle according to the first embodiment;
Fig. 3 is a diagram showing a configuration of a display control apparatus and a display control system including the display control apparatus according to the first embodiment;
Fig. 4 is a diagram illustrating a video image indicated by display video image data;
Fig. 5 is a flowchart showing a display control method executed by the display control apparatus according to the first embodiment;
Fig. 6 is a diagram illustrating a video image indicated by the display video image data;
Fig. 7 is a diagram illustrating a video image indicated by the display video image data;
Fig. 8 is a diagram illustrating a video image indicated by the display video image data;
Fig. 9 is a flowchart showing a display control method executed by a display control apparatus according to a second embodiment;
Fig. 10 is a flowchart showing a display control method executed by the display control apparatus according to the second embodiment;
Fig. 11 is a diagram illustrating a video image indicated by display video image data;
Fig. 12 is a diagram illustrating a video image indicated by display video image data according to a third embodiment;
Fig. 13 is a diagram illustrating a video image indicated by the display video image data according to the third embodiment;
Fig. 14 is a diagram illustrating a video image indicated by the display video image data according to the third embodiment;
Fig. 15 is a diagram illustrating a video image indicated by display video image data according to a fourth embodiment;
Fig. 16 is a diagram illustrating a video image indicated by the display video image data according to the fourth embodiment;
Fig. 17 is a diagram illustrating a video image indicated by the display video image data according to the fourth embodiment;
Fig. 18 is a diagram illustrating a video image indicated by the display video image data according to the fourth embodiment; and
Fig. 19 is a diagram showing a video image when intervals between the auxiliary lines are changed.

### Description of Embodiments

### (First Embodiment)

Hereinafter, with reference to the drawings, embodiments of the present disclosure will be explained. Substantially identical components will be denoted by identical reference numerals. Further, while a case in which a vehicle is parked while travelling backward will be explained in the following embodiments, the same technique can be applied also to a case in which the vehicle is parked while travelling forward. That is, processing that will be described later is executed in accordance with the backward travelling operation or the forward travelling operation.

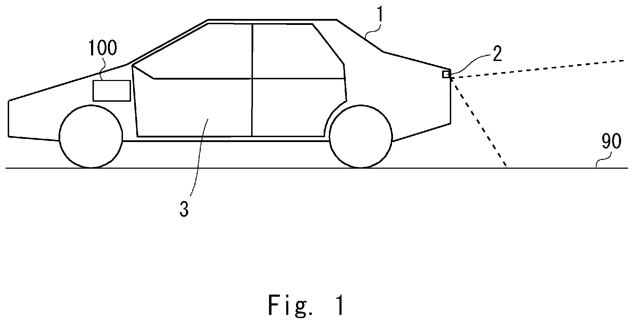

Fig. 1 is a diagram showing a vehicle 1 according to a first embodiment. The vehicle 1 includes a rear camera 2 and a display control apparatus 100. The rear camera 2 is installed in the rear part of the vehicle 1 and captures images of the rear part of the vehicle 1 including a road surface 90. The rear camera 2 is used when the vehicle 1 is parked while travelling backward. When the vehicle is parked while travelling forward, video images of a front camera (not shown) in place of the rear camera 2 are used. It is sufficient that the vehicle 1 include at least one of the front camera and the rear camera 2 as a camera that captures images of the travelling direction. Further, the vehicle 1 includes a door 3 that can be opened and closed. The display control apparatus 100 may be provided in a desired position of the vehicle 1. The display control apparatus 100 may be connected to a Control Area Network (CAN). The display control apparatus 100 performs control to superimpose predicted course lines on the video images captured by the rear camera 2. The details thereof will be described later.

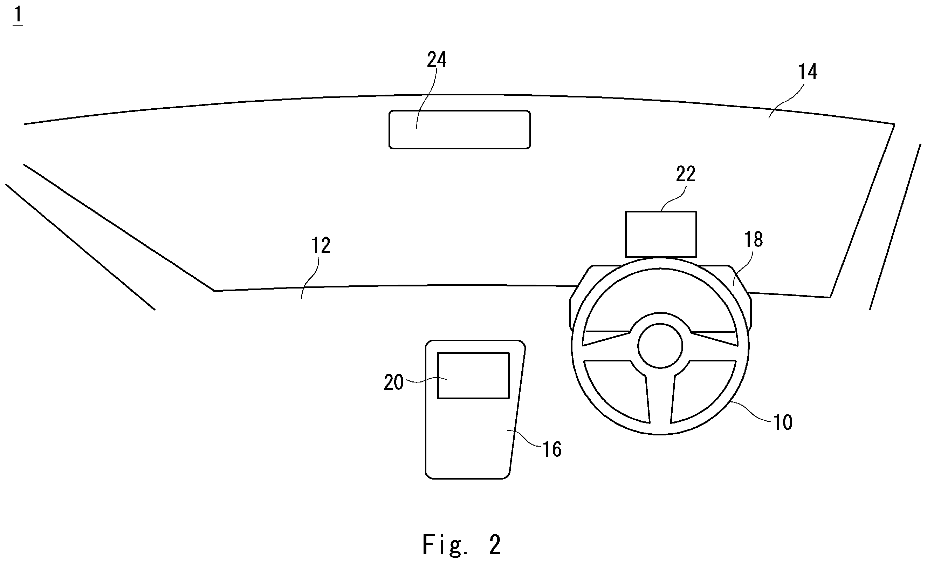

Fig. 2 is a diagram showing an internal part of the vehicle 1 according to the first embodiment. Fig. 2 is diagram showing a driver's cabin inside the vehicle 1 seen from the driver's seat in the front direction of vehicle 1. The vehicle 1 includes a steering wheel 10, a dashboard 12, a windshield 14, a center console 16, a cluster panel 18 that displays the travelling speed and the engine speed of the vehicle etc. The center console 16 may further include a center display unit 20 that displays a navigation screen or the like. In the vehicle 1, a head-up display display unit 22 on which video images are displayed by a head-up display may be provided on the upper part of the cluster panel 18. When the head-up display is a combiner type, the head-up display display unit 22 is a combiner. Further, when the head-up display displays virtual images on the windshield 14, the head-up display display unit 22 is an area of the windshield 14 where the virtual images are presented. Further, the vehicle 1 may include a rearview monitor 24. The rearview monitor 24 is arranged in a position similar to a position where a rearview mirror for checking the rear side of a vehicle in a typical vehicle, that is, at around the center of the upper part of the windshield 14.

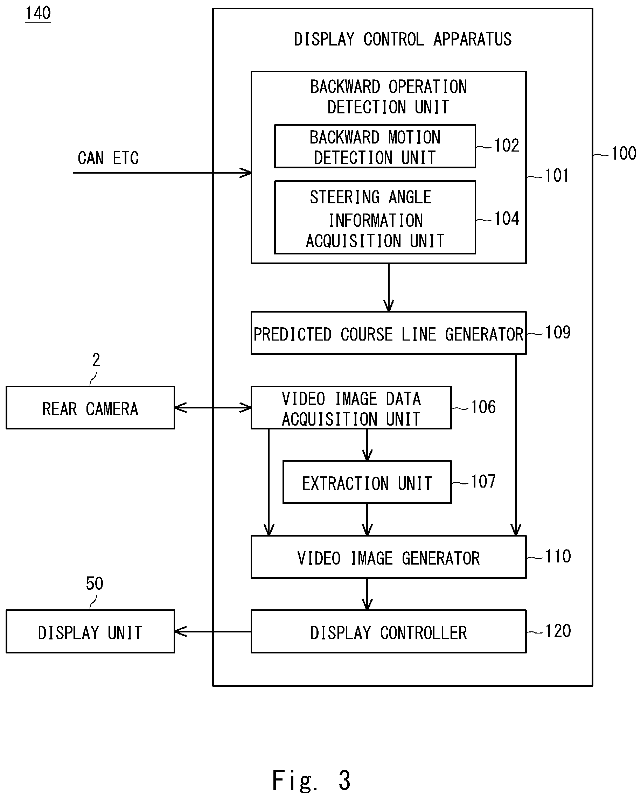

Fig. 3 is a diagram showing a configuration of the display control apparatus 100 and a display control system 140 including the display control apparatus 100 according to the first embodiment. The display control system 140 includes the rear camera 2, a display unit 50, and the display control apparatus 100.

The display control apparatus 100 is connected to the rear camera 2 and the display unit 50 in such a way that the display control apparatus 100 can communicate with them. The display control apparatus 100 includes a backward operation detection unit 101, a video image data acquisition unit 106, an extraction unit 107, a predicted course line generator 109, a display video image generator 110, and a display controller 120. The backward operation detection unit 101 includes a backward motion detection unit 102 and a steering angle information acquisition unit 104. At least one component or all the components of the display control system 140 may be included in the vehicle 1 or may be removed from the vehicle 1 and carried.

The display unit 50 displays the video images captured by the rear camera 2. The display unit 50 may be achieved, for example, by the rearview monitor 24, the cluster panel 18, the center display unit 20, or the head-up display display unit 22. Further, the display unit 50 may be achieved by a mobile terminal device such as a smart phone, a tablet terminal or the like that can communicate with the display control apparatus 100. Further, the display control apparatus 100 may be, for example, a computer apparatus included in the center console 16 or the like or may be the aforementioned mobile terminal device.

The display control apparatus 100 is composed of a processor such as a Central Processing Unit (CPU), a storage device such as a memory, a user interface, and various peripheral circuits. That is, the display control apparatus 100 includes a function as a computer. Further, the display control apparatus 100 causes the processor to execute a program stored in the storage device, thereby achieving the components such as the backward operation detection unit 101, the backward motion detection unit 102, the steering angle information acquisition unit 104, the video image data acquisition unit 106, the extraction unit 107, the predicted course line generator 109, the display video image generator 110, and the display controller 120. Further, the components of the display control apparatus 100 are not limited to be achieved by software by a program and may be achieved, for example, by any combination of hardware, firmware, and software. Further, the components of the display control apparatus 100 may be achieved, for example, by using an integrated circuit such as a field-programmable gate array (FPGA) or a microcomputer that can be programmed by the user. In this case, a program composed of each of the aforementioned components may be achieved using this integrated circuit. The same is applicable also to the other embodiments described later.

The backward operation detection unit 101 detects the backward operation of the vehicle 1. Therefore, the backward operation detection unit 101 includes the backward motion detection unit 102 and the steering angle information acquisition unit 104. The backward motion detection unit 102 detects whether or not the vehicle 1 is travelling backward. The backward motion detection unit 102 acquires, for example, information indicating that a reverse gear has been selected from the CAN or the like and detects that the vehicle 1 is travelling backward.

The steering angle information acquisition unit 104 acquires signals from the CAN or the like and acquires steering angle information indicating the steering angle in the wheels of the vehicle 1. The steering angle information includes, besides information indicating the steering angle, information indicating the steering direction such as right or left. The steering angle information may indicate the steering angle of the steering wheel 10. The steering angle information acquisition unit 104 outputs the steering angle information that has been acquired to the predicted course line generator 109. In particular, the steering angle information acquisition unit 104 acquires the steering angle information when the vehicle 1 is stopped or at the time of the backward operation.

The predicted course line generator 109 generates the predicted course lines based on the steering angle detected by the steering angle information acquisition unit 104. It can also be said that the predicted course lines are guide lines, backward travelling predicted loci, predicted track lines or the like. The predicted course lines are generated in accordance with, for example, a predicted travelling direction. The predicted travelling direction is a direction in which the vehicle 1 travels at a detected steering angle. Specifically, when the vehicle 1 travels backward while turning, the predicted travelling direction is along an arc having a rotation radius in accordance with the steering angle on the road surface 90. Alternatively, when the vehicle 1 is parked while travelling forward, the predicted travelling direction is a straight line on the road surface 90. Further, the predicted course line generator 109 generates auxiliary lines of the predicted course lines. The predicted course lines and the auxiliary lines will be explained later. While the predicted course line generator 109 generates the auxiliary lines in addition to the predicted course lines, the predicted course line generator 109 may generate only the auxiliary lines without generating the predicted course lines.

The video image data acquisition unit 106 acquires video image data from the camera installed in the vehicle 1 in the travelling direction. When the vehicle 1 travels backward, the video image data acquisition unit 106 acquires the video image data from the rear camera 2. The video image data acquisition unit 106 outputs the video image data that has been acquired to the display video image generator 110 and the extraction unit 107. The video image data is data indicating the video images in which the images of the rear part of the vehicle 1 are captured by the rear camera 2. The video images captured when the vehicle 1 is parked in a parking section by the backward travelling motion may include an image indicating the parking section and an image indicating parking section lines indicating the border of the parking section.

Further, the parking section means a parking space where the vehicle 1 can be parked. The parking section may be divided by, for example, parking section lines such as white lines drawn on the road surface 90. In this case, the section boundary corresponds to the parking section lines drawn on the road surface 90. Further, the parking section may not be divided by the parking section lines and may be divided by obstacles such as walls. In this case, the section boundary corresponds to the obstacles. Further, the parking section may not be physically divided and may be a space that is sufficiently large to park the vehicle 1. In this case, the section boundary corresponds to another vehicle or the like that is parked next to the vehicle 1. Even when the parking space is divided by the parking section lines, it is possible that the other vehicle that is parked at the next parking space may be parked so as to cross the parking section line. In this case, the section boundary corresponds to the other vehicle that is parked so as to cross the parking section line. In the following description, the "obstacle" may include not only an object such as a wall fixed in the vicinity of the parking section and may include another vehicle or the like.

The extraction unit 107 extracts a deep-side division line and lateral-side division lines of the parking section based on the video image data. The division lines of the parking section typically include the deep-side division line indicating the section boundary on a deep side (a back side, that is, a far side) and the lateral-side division lines indicating the section boundary on the lateral sides (the left side and the right side). The division lines may be extracted by various existing methods. The extraction unit 107 may extract the section boundary by recognizing, for example, the parking section lines, obstacles, or another vehicle by edge detection. Further, when the section boundary is a white line, the extraction unit 107 may extract the section boundary by recognizing the white line. Further, when the display control apparatus 100 stores dictionary data indicating the parking section lines, the vehicle and the like in advance, the extraction unit 107 may compare the dictionary data with the object in the video image data and recognize the parking section lines, the vehicle and the like, thereby extracting the section boundary.

The extraction unit 107 can recognize the parking section. The parking section may be recognized by various existing methods. A rectangular area formed by the section boundary may be recognized, for example, as the parking section.

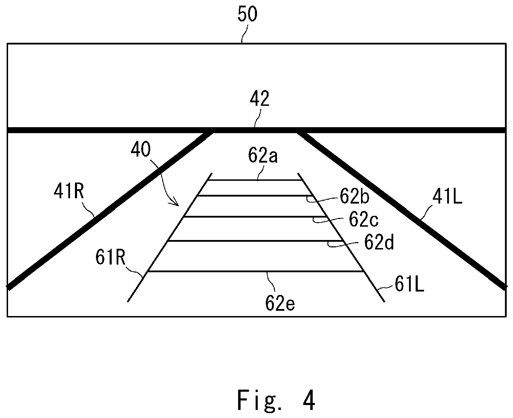

Fig. 4 shows one example of the parking section lines and the predicted course lines. Fig. 4 is a diagram schematically showing a display video image displayed on the display unit 50. The display video image is obtained by projecting the road surface 90 onto an imaging surface perpendicular to the optical axis of the rear camera 2 (see also Fig. 1). Therefore, the upper direction of the display video image corresponds to the backward travelling direction as the travelling direction of the vehicle 1. That is, the upper side of the display video image corresponds to the deep side of the parking section 40 and the lower side of the display video image corresponds to the front side of the parking section 40. In the following description, since the right-left direction is based on the orientation of the vehicle 1, this right-left direction is opposite to that in Fig. 4. That is, since the lower side of Fig. 4 corresponds to the front side of the vehicle 1, the left side of Fig. 4 corresponds to the right side of the vehicle 1 and the right side of Fig. 4 corresponds to the left side of the vehicle 1. Further, Fig. 4 shows a case in which the vehicle 1 is parked while travelling straight backward. That is, the vehicle 1 is moved straight back and enters the parking section 40.

The parking section 40 includes right and left lateral-side division lines 41R and 41L and a deep-side division line 42. Specifically, the lateral-side division line 41L corresponds to the border line on the left side and the lateral-side division line 41R corresponds to the border line on the right side. The deep-side division line 42 corresponds to the deep-side border line. The deep-side division line 42 connects the left lataral-side division line 41L and the right lataral-side division line 41R on the deep side (upper side on the display video image). Each of the division lines indicates the border line between the parking section 40 and an area outside the parking section. In this way, the parking section 40 is defined by the plurality of division lines.

On the road surface 90, typically, the right and left lataral-side division lines 41R and 41L and the deep-side division line 42 are formed in a U-shape. While the left lataral-side division line 41L and the right lataral-side division line 41R are typically parallel to each other on the road surface 90, since the road surface 90 is projected onto the imaging surface, these lines have different angles on the display video image. That is, on the display video image, the left lataral-side division line 41L and the right lataral-side division line 41R are not parallel to each other. Further, the parking section lines may include a front-side division line positioned on the front side of the vehicle 1, although it is not shown in Fig. 4.

A pair of predicted course lines 61L and 61R correspond to the width of the vehicle 1. That is, in the display video image data, the width of the pair of predicted course lines 61L and 61R corresponds to the width of the vehicle 1. On the road surface 90, the pair of predicted course lines 61L and 61R are parallel to the predicted travelling direction. In Fig. 4, the vehicle 1 travels straight backward. Therefore, the predicted course lines 61L and 61R are straight lines.

The predicted course lines 61L and 61R correspond to the width of the vehicle 1 and are drawn in accordance with the backward operation of the vehicle 1. The predicted course lines 61L and 61R indicate the predicted loci of the backward operation of the vehicle 1. In other words, the predicted course lines 61L and 61R indicate predicted loci on the road surface 90 in the right end and the left end of the vehicle 1 when the vehicle 1 performs the backward operation with the steering angle indicated by the steering angle information acquired by the steering angle information acquisition unit 104.

Further, in the display video image, a plurality of auxiliary lines 62a-62e are added to the predicted course lines 61L and 61R. The respective auxiliary lines 62a-62e indicate distances from the end part of the vehicle 1 in the travelling direction and they are arranged, as an example, between the pair of predicted course lines 61L and 61R. The end part of the vehicle 1 in the travelling direction is a back end part of the vehicle 1 such as a back-side bumper when the vehicle 1 travels backward, and the respective auxiliary lines 62a-62e indicate the distances from the back end part of the vehicle 1 set in advance. Since the rear camera 2 is fixed to the vehicle 1, the pixel position that corresponds to the back end part of the vehicle 1 in the display screen are constant.

In the following description, the plurality of auxiliary lines 62a-62e are referred to as an auxiliary line 62 when it is not necessary to specifically differentiate one from the others. While five auxiliary lines 62a-62e are shown in Fig. 4, the number of auxiliary lines 62 are not particularly limited and may be, for example, three. The predicted course line generator 109 may generate two or more auxiliary lines 62.

The auxiliary lines 62a-62e are displayed in such a way that they connect the pair of predicted course lines 61L and 61R. While the auxiliary lines 62 are provided for the whole area between the pair of predicted course lines 61L and 61R, they may be provided only in a part of the area between the pair of predicted course lines 61L and 61R. That is, the auxiliary lines 62a-62e are not limited to be the lines that connect the pair of predicted course lines 61L and 61R and may be partially provided in the lateral direction, or may be extended to the outside of the pair of predicted course lines 61L and 61R.

The auxiliary lines 62 are solid lines that connect the pair of predicted course lines 61L and 61R. On the road surface 90, the auxiliary lines 62 are perpendicular to the predicted course lines 61L and 61R at positions where the auxiliary lines 62 intersect with the pair of predicted course lines 61L and 61R. Since the vehicle 1 travels straight backward in Fig. 4, each of the auxiliary lines 62 is arranged along the lateral direction of the display screen. The auxiliary lines 62a-62e are substantially parallel to one another. The plurality of auxiliary lines 62a-62e are aligned in the predicted travelling direction.

In Fig. 4, the auxiliary line 62a is located in the backmost position, that is, in the farthest position from the vehicle 1 and the auxiliary line 62e is located in the foremost position, that is, in the closest position to the vehicle 1. The auxiliary line 62a, the auxiliary line 62b, the auxiliary line 62c, the auxiliary line 62d, and the auxiliary line 62e are arranged sequentially from the back side. The plurality of auxiliary lines 62 are superimposed on the display video image in such a way that they are arranged at equal intervals on the road surface 90. Since the road surface 90 is projected on the imaging surface, even when the plurality of auxiliary lines 62 are arranged at equal intervals on the road surface 90, they are not arranged at equal intervals on the display screen.

The predicted course lines 61L and 61R and the auxiliary lines 62 move in association with the direction of the backward traveling of the vehicle 1. When, for example, the steering angle is changed, the display positions of the predicted course lines 61L and 61R and the auxiliary lines 62 are changed. Further, the rear camera 2 and the parking section 40 become close to each other in accordance with the backward travelling of the vehicle 1. Therefore, in accordance with the backward travelling of the vehicle 1, the display positions of the lateral-side division lines 41L and 41R and the deep-side division line 42 move downward.

Referring back to Fig. 3, when the vehicle 1 travels backward, the display video image generator 110 generates the display video image data in which the pair of predicted course lines 61L and 61R and the auxiliary lines 62 are superimposed on the video image data acquired by the video image data acquisition unit 106. The display controller 120 causes the display unit 50 to display the video images by the display video image data.

The display video image generator 110 generates the display video image data in such a way as to change the display forms of the auxiliary lines 62 in order from the deep-side (far side) auxiliary line 62. Specifically, the display forms are changed in the order of the auxiliary line 62a, the auxiliary line 62b, the auxiliary line 62c, the auxiliary line 62d, and the auxiliary line 62e. The display video image generator 110 generates the display video image data in such a way that the display forms of the auxiliary lines 62 are changed from the deep-side auxiliary line 62 at predetermined time intervals.

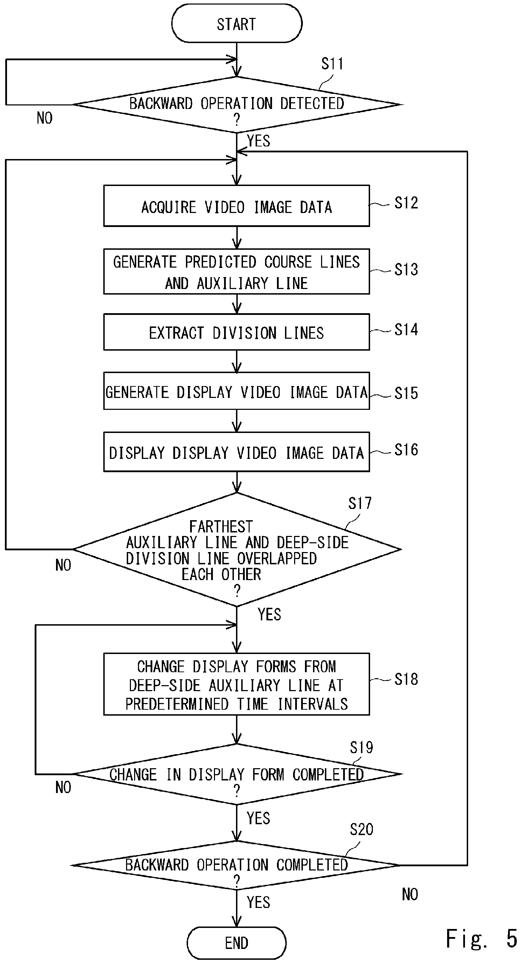

Next, with reference to Fig. 5, a display control method executed by the display control apparatus 100 according to this embodiment will be explained. Fig. 5 is a flowchart showing the display control method.

The backward operation detection unit 101 determines whether it has detected the backward operation of the vehicle 1 (S11). When the backward operation detection unit 101 has detected the backward operation of the vehicle 1 (YES in S11), the video image data acquisition unit 106 acquires the video image data of the back-side video images captured by the rear camera 2 (S12). Specifically, when the backward motion detection unit 102 detects that the gear of the vehicle 1 has been shifted to the reverse gear, the rear camera 2 captures the back-side video images. Then the rear camera 2 outputs the video image data to the display control apparatus 100. When the backward operation detection unit 101 does not detect the backward operation of the vehicle 1 (NO in S11), the determination in S11 is repeated until the backward operation detection unit 101 detects the backward operation.

Next, the predicted course line generator 109 generates the predicted course lines 61L and 61R and the auxiliary lines 62 (S13). Specifically, after the steering angle information acquisition unit 104 acquires the steering angle information, the predicted course line generator 109 calculates the predicted course lines 61L and 61R and the auxiliary lines 62 based on the steering angle information, and the extraction unit 107 extracts the deep-side division line 42 and the right and left lataral-side division lines 41R and 41L based on the video image data (S14). The order of S13 and S14 may be reversed or S13 and S14 may be performed in parallel to each other.

The display video image generator 110 generates the display video image data (S15). Accordingly, the display video image data in which the pair of predicted course lines 61L and 61R and the auxiliary lines 62 are superimposed on the video image data is generated (see Fig. 4).

The display controller 120 causes the display unit 50 to display the video image by the display video image data (S16). Accordingly, as shown in Fig. 4, the video image in which the predicted course lines 61L and 61R and the auxiliary lines 62 are superimposed is displayed on the display unit 50.

The display video image generator 110 determines whether the farthest (deepest) auxiliary line 62a of the plurality of auxiliary lines 62 and the deep-side division line 42 has overlapped each other (S17). In S17, it is determined whether a trigger timing when the display forms of the auxiliary lines 62 should be changed has come. When the auxiliary line 62a and the deep-side division line 42 do not overlap each other (NO in S17), the processing from S12 is repeated until the auxiliary line 62a and the deep-side division line 42 overlap each other. That is, when the auxiliary line 62a is in front of the deep-side division line 42, the determination in S17 is repeated until the auxiliary line 62a and the deep-side division line 42 overlap each other. Since the range captured by the rear camera 2 is changed in accordance with the backward travelling of the vehicle 1, the position of the parking section 40 on the display screen is changed. Therefore, by performing Steps S12-S16 sequentially, the predicted course lines 61L and 61R and the auxiliary lines 62 can be appropriately displayed all the time.

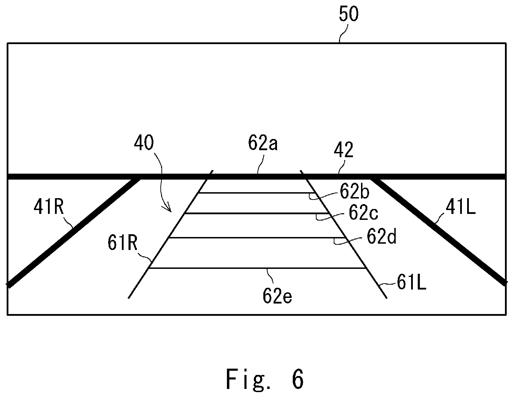

When it is determined that the farthest auxiliary line 62a has overlapped the deep-side division line 42 (YES in S17), the display video image generator 110 changes the display forms from the deep-side auxiliary line 62 at predetermined time intervals (S18). That is, the display forms are changed in the order of the auxiliary line 62a, the auxiliary line 62b, the auxiliary line 62c, the auxiliary line 62d, and the auxiliary line 62e. Fig. 6 shows a display video image at the timing when the auxiliary line 62a and the deep-side division line 42 overlap each other. At the next timing (frame), the display form of the auxiliary line 62a is changed. Since Fig. 6 indicates the straight backward travelling, the auxiliary line 62a and the deep-side division line 42 are parallel to each other and the auxiliary line 62a and the deep-side division line 42 completely overlap each other. In a case of steering backward travelling, the auxiliary line 62a and the deep-side division line 42 are not parallel to each other and the auxiliary line 62a and the deep-side division line 42 partially overlap each other.

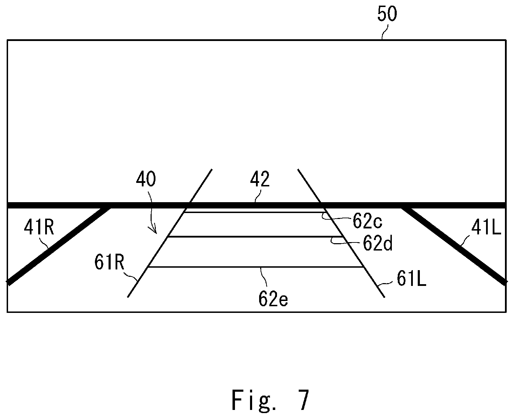

Fig. 7 shows a display video image after the display forms of the two auxiliary lines 62a and 62b are changed. In Fig. 7, the two deep-side auxiliary lines 62a and 62b are deleted. The auxiliary lines 62a and 62b are not displayed. Further, the auxiliary lines 62c, 62d, and 62e are lines before the change in the display form. While the example in which the auxiliary lines 62 are deleted is shown in Fig. 7 as the change in the display form, in other examples, the type of the line, the width of the line, or the color of the line may be changed. Specifically, in order to change the display form, the auxiliary line 62 shown by a solid line may be changed to a broken line, the auxiliary line 62 shown by a thick line may be changed to a thin line, and the auxiliary line 62 shown by a dark color may be changed to a light color or translucent. Further, while the part of the predicted course lines 61L and 61R that has exceeded the deep-side division line 42 is shown in Fig. 7, the part of the predicted course lines 61L and 61R that has exceeded the deep-side division line 42 may be deleted. That is, regarding the part of the predicted course lines 61L and 61R that exceeded the deep-side division line 42, the display form thereof may be changed, similar to the processing in the auxiliary line 62a and the like. Accordingly, the length of each of the predicted course lines 61L and 61R is changed in accordance with the backward operation.

The time intervals in which the display forms of the plurality of auxiliary lines 62 are changed may be set in accordance with a typical travelling speed of the vehicle 1 at the time of parking. For example, a typical backward travelling speed at the time of parking (hereinafter this speed will be referred to as a threshold speed) is 4-5 km/h. When the vehicle 1 travels backward at this threshold speed, the timings when the display forms are changed are determined in such a way that the timings when the display forms are changed coincide with the timing when the deep-side division line 42 and the auxiliary lines overlap each other.

A speed that can generally be considered to be safe as the backward travelling speed at a parking lot or the like is set as the threshold speed in advance. Further, since the backward travelling speed that is recognized to be safe varies depending on the user of the vehicle, the threshold speed can be changed by causing each vehicle or each driver to learn the threshold. For example, when the reference threshold speed is set to be 4 km/h (1.1 m/sec) and the backward travelling speed in the case in which the parking section line has been recognized is slower than the threshold speed by 0.6 km/h (0.17 m/sec) in average, the threshold speed is set to be 3.4 km/h (0.94 m/sec). In a similar way, when the backward travelling speed in the case in which the parking section line has been recognized is faster than the threshold speed by 0.6 km (0.17 m/sec) in average, the threshold speed is set to be 4.6 km/h (1.28 m/sec). When the driver is specified by the ID of the intelligent key, for example, the setting in the aforementioned processing may be changed for each driver.

Further, different values may be set as the threshold speed depending on the parking lot. For example, information stored as facility information in a navigation (not shown) may be acquired or the threshold speed may be acquired from a server that provides the parking lot information or an information providing device installed in the parking lot using a communication apparatus (not shown) based on the size of the parking section for each parking lot, the road surface situation and the like.

Referring back to the descriptions of the plurality of auxiliary lines in Fig. 7, specifically, when the intervals between the auxiliary lines 62 on the road surface are set to be 2.2 m and the typical backward travelling speed is set to be 1.1 m/sec, the timing when the display forms of the auxiliary lines 62 are changed are every two seconds. At the trigger timing when the auxiliary line 62a overlaps the deep-side division line 42, the auxiliary line 62a is deleted. The auxiliary line 62b is deleted two seconds after the deletion of the auxiliary line 62a. The auxiliary lines 62c-62e are also deleted sequentially at the intervals of two seconds.

It is possible to set the time intervals in which the display forms of the auxiliary lines 62 are changed in accordance with the intervals between the auxiliary lines 62 on the road surface and the threshold speed. As a matter of course, the aforementioned values are merely examples and can be changed as appropriate. As a matter of course, the display forms may be changed not only with constant time intervals and may be changed with different time intervals.

Returning to the description regarding Fig. 5, the display video image generator 110 determines whether the change in the display form has completed (S19). That is, the display video image generator 110 determines whether the display forms of all the auxiliary lines 62a-62e have been changed. When the change in the display forms has not completed (NO in S19), the process goes back to S18, where the display forms of the auxiliary lines 62 are changed sequentially. Accordingly, the display forms can be changed sequentially from the deep-side auxiliary line 62a to the auxiliary line 62e.

When the change in the display forms has been completed (YES in S19), the backward operation detection unit 101 determines whether the backward operation has been completed (S20). When the backward operation has not been completed (NO in S20), the process goes back to S12, where the processing is repeated. Since the range captured by the rear camera 2 varies in accordance with the backward travelling of the vehicle 1, the position of the parking section 40 on the display screen is changed. Therefore, by performing the steps of S12-S16 sequentially, the predicted course lines 61L and 61R and the auxiliary lines 62 can be appropriately displayed constantly. When the backward operation is completed (YES in S20), the processing is completed.

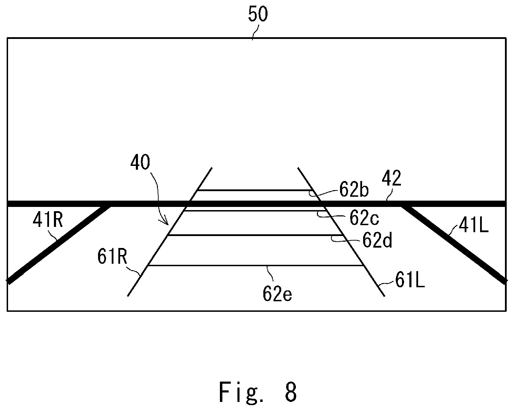

According to the above processing, the driver can recognize whether the travelling speed at the time of parking is appropriate. When the backward travelling speed of the vehicle 1 is equal to or smaller than the threshold speed, the display forms of the auxiliary lines 62 are changed before the auxiliary line 62 before the change in the display form goes behind the deep-side division line 42. Therefore, the driver can recognize that he/she is travelling backward at an appropriate speed. When the backward travelling speed of the vehicle 1 is higher than the threshold speed, the auxiliary line 62 before the change in the display form is displayed above the deep-side division line 42. For example, as shown in Fig. 8, the auxiliary line 62b exceeds the deep-side division line 42.

In other words, when the auxiliary line 62 before the change in the display form is farther than the deep-side division line 42 (upper side on the display screen), the driver can recognize that the backward travelling speed is higher than the threshold speed. On the other hand, when the auxiliary line 62 before the change in the display form is deleted before it is displayed farther than the deep-side division line 42, the driver can recognize that the backward travelling speed is equal to or smaller than the threshold speed. In this way, the driver can recognize that the backward travelling speed is fast so that the backward travelling speed can be made slow. In other words, this can motivate the driver to drive at an appropriate backward travelling speed. In this way, by changing the display forms of the auxiliary lines 62 as described above, it is possible to support the driver so that the driver can travel at an appropriate speed.

Further, in S17, the timing when the farthest auxiliary line 62a has reached the position that corresponds to the deep-side division line 42 is set to be the trigger timing. The display forms of the auxiliary lines 62a-62e are changed from the trigger timing at the predetermined time intervals. In this way, the display forms of the auxiliary lines 62a-62e may be changed sequentially by simple processing. When the auxiliary line 62 before the change in the display form exceeds the deep-side division line 42, the driver recognizes that the backward travelling speed is fast. Accordingly, the driver can intuitively recognize that the backward travelling speed is fast.

As a matter of course, a timing other than the timing when the auxiliary line 62a overlaps the deep-side division line 42 may be set to be the trigger timing. For example, the timing when the auxiliary line 62a has reached the pixel deviated upward or downward from the deep-side division line 42 by predetermined pixels may be set to be the trigger timing. Further, the trigger timing may be set by a position other than the deep-side division line 42. The trigger timing may be set, for example, based on a car stopper in the parking section 40. In this case, the extraction unit 107 extracts the car stopper from the video image data. The timing when the auxiliary line 62a has overlapped a pixel deviated upward from the pixel of the car stopper by predetermined pixels is set to be the trigger timing.

As described above, in this embodiment, the predicted course line generator 109 serves as a superimposed data generator that generates the superimposed data superimposed on the video image data acquired by the rear camera 2. In this example, the superimposed data are the auxiliary lines 62 indicating positions located away from the vehicle 1 by predetermined distances in the travelling direction of the vehicle 1. The auxiliary lines 62 are displayed in positions located away from the vehicle 1 by predetermined distances. While the predicted course line generator 109 generates the auxiliary lines 62 and the predicted course lines 61L and 61R as the superimposed data, it may generate only the auxiliary lines 62.

The display video image generator 110 generates the display video image data in such a way that the display controller 120 causes the display unit 50 to display (a), where (a) is to display the superimposed data in such a way that the display forms of the plurality of pieces of superimposed data are changed sequentially from the far side of the vehicle at predetermined time intervals. Specifically, the plurality of auxiliary lines 62a-62e, which are the superimposed data, are displayed in such a way that they are deleted sequentially from the far side of the vehicle at predetermined time intervals.

### (Second Embodiment)

In this embodiment, a step of highlighting the auxiliary line 62 that has exceeded the deep-side division line 42 is added to the method according to the first embodiment. Since the basic configurations of the display control apparatus 100 and the display control method and the processing thereof are similar to those of the first embodiment, descriptions thereof will be omitted.

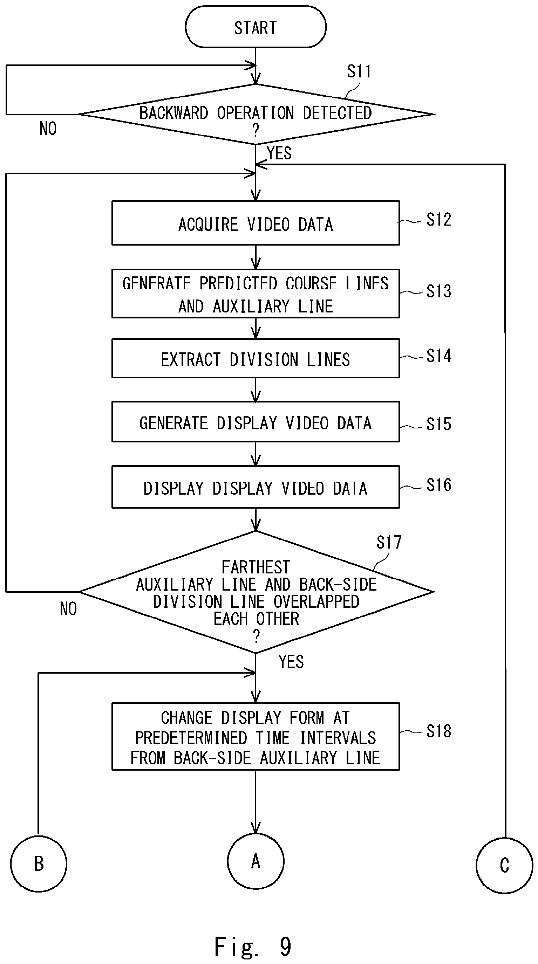

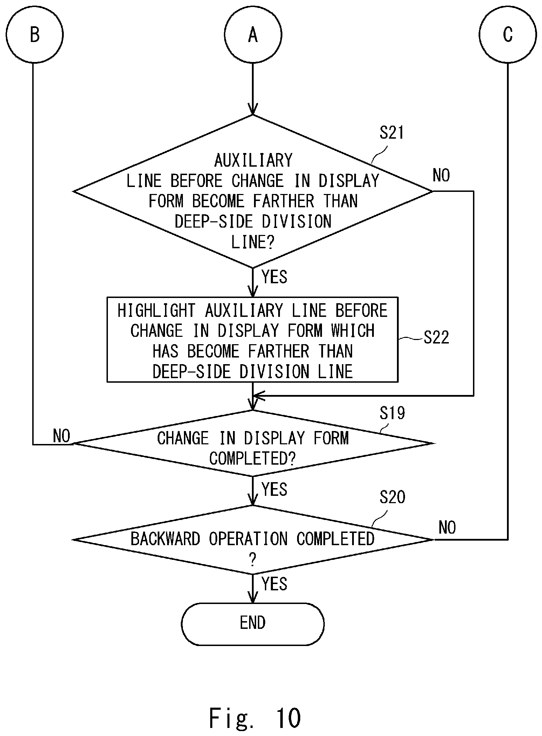

Figs. 9 and 10 show a flowchart of the display control method according to the second embodiment. In order to highlight the auxiliary lines, S21 and S22 are added to the flowchart shown in Fig. 5. Since S11-S18 are the same as those in the first embodiment, the descriptions thereof will be omitted. Further, since S19 and S20 are the same as those in the first embodiment, the descriptions thereof will be omitted.

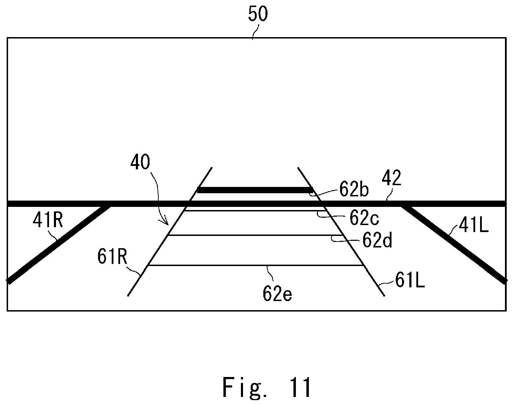

When the display form is changed from the deep-side auxiliary line 62 in S18, the display video image generator 110 determines whether the auxiliary line 62 before the change in the display form has become farther than the deep-side division line 42 (S21). When the auxiliary line 62 before the change in the display form has become farther than the deep-side division line 42 (YES in S21), the auxiliary line 62 before the change in the display form which has become farther than the deep-side division line 42 is highlighted (S22). As shown in Fig. 11, for example, the auxiliary line 62b before the change in the display form which has become farther than the deep-side division line 42 is displayed by a thick line. Alternatively, the color of the auxiliary line 62b before the change in the display form which has become farther than the deep-side division line 42 may be changed to a highlight color such as red. By changing the width of the line, the type of the line, the color of the line or the like, the auxiliary line 62b before the change in the display form which has become farther than the deep-side division line 42 can be highlighted.

After the highlighting operation, it is determined whether the change in the display form has been completed (S19). Further, when the auxiliary line 62 before the change in the display form is not farther than the deep-side division line 42 (NO in S21), it is determined whether the change in the display form has been completed (S19). By highlighting the auxiliary line 62, it can be easily recognized that the auxiliary line 62 before the change in the display form has become farther than the deep-side division line 42. In this way, it is possible to warn the driver that the backward travelling speed is fast.

When it is determined in S19 whether the change in the display form has been completed, this determination may not be performed for the auxiliary line 62e drawn in a position that is the closest to the vehicle 1 if the change in the display form is deletion of the auxiliary line 62. This is because, if the auxiliary line 62e drawn in a position that is the closest to the vehicle 1 is deleted, it is possible that the vehicle 1 may come close to the deep-side division line 42 too much or the vehicle 1 may exceed the deep-side division line 42.

As described above, in this embodiment, the predicted course line generator 109 serves as the superimposed data generator configured to generate the superimposed data superimposed on the video image data acquired by the rear camera 2. While the predicted course line generator 109 generates the auxiliary lines 62 and the predicted course lines 61L and 61R as the superimposed data, it may generate only the auxiliary lines 62. Then the display video image generator 110 generates the display video image data in such a way that the display controller 120 causes the display unit 50 to display the aforementioned (a). Further, in this embodiment, the superimposed data that has exceeded the deep-side division line 42 is highlighted.

### (Third Embodiment)

In the aforementioned embodiments, the example in which the display forms of the auxiliary lines 62 are changed has been described. The auxiliary lines 62 are superimposed on the video image data, whereby the auxiliary lines 62 are arranged in such a way that the intervals thereof are, for example, 1 m, 2 m, 3 m or the like from the vehicle end part with respect to the road surface of the video image data. A further increase in the number of auxiliary lines inhibits visibility of the video image data.

When, for example, the auxiliary line 62a overlaps the deep-side division line 42, the auxiliary line 62a is deleted, and the auxiliary line 62b is deleted after a predetermined period of time. In the meantime, there is no object that indicates the threshold speed. Therefore, in this embodiment, the following display is performed. Since the basic configuration and the operations of the display control apparatus 100 are similar to those described in the first embodiment, detailed descriptions thereof will be omitted.

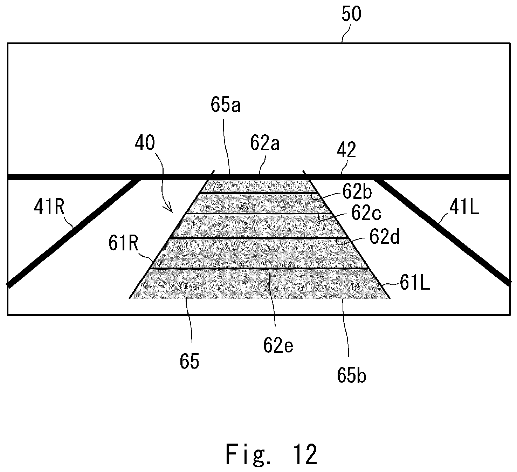

Fig. 12 shows a display video image when the vehicle 1 travels straight backward substantially at the center of the parking section in the width direction. Fig. 12 shows the display video image at the timing when the vehicle 1 travels straight backward and the auxiliary line 62a and the deep-side division line 42 overlap each other. That is, Fig. 12 shows a display example in which the vehicle 1 travels further backward from the state shown in Fig. 4, and shows a timing similar to that shown in Fig. 6. In this embodiment, the area where the auxiliary lines 62 are present (hereinafter this area will be referred to as an auxiliary area 65) is displayed on the display unit 50. The predicted course line generator 109 generates the auxiliary area 65 as the superimposed data.

The auxiliary area 65 is an area filled translucently and transmits video images of the video image data. In this example, the auxiliary area 65 is colored gray. As a matter of course, the color of the auxiliary area 65 is not particularly limited. Since the color of the auxiliary area 65 is preferably different from that of the road surface, the auxiliary area 65 may be filled translucently by green or yellow. The auxiliary area 65 indicates the position located apart from the back end part of the vehicle 1 by a predetermined distance. Specifically, the auxiliary area 65 is an area including a position located away from the vehicle 1 by a predetermined distance as a border.

Since the auxiliary line 62a and the deep-side division line 42 overlap each other in the auxiliary area 65 in Fig. 12, an end part 65a of the auxiliary area 65 on the deep side (hereinafter, this part is referred to as a deep-side end part 65a) coincides with the deep-side division line 42. Further, an end part 65b of the auxiliary area 65 on the front side (hereinafter, this part is referred to as a front-side end part 65b) coincides with the end of the predicted course lines 61L and 61R on the front side. Further, the right and left ends of the auxiliary area coincide with the predicted course lines 61L and 61R. When the vehicle travels straight backward, the auxiliary area 65 has a substantially trapezoidal shape.

The display video image generator 110 generates the display video image data in which the auxiliary area 65, the auxiliary lines 62, and the predicted course lines 61L and 61R are superimposed on the video image data acquired by the video image data acquisition unit 106. Therefore, the driver is able to visually recognize the video images by the video image data via the translucent auxiliary area 65.

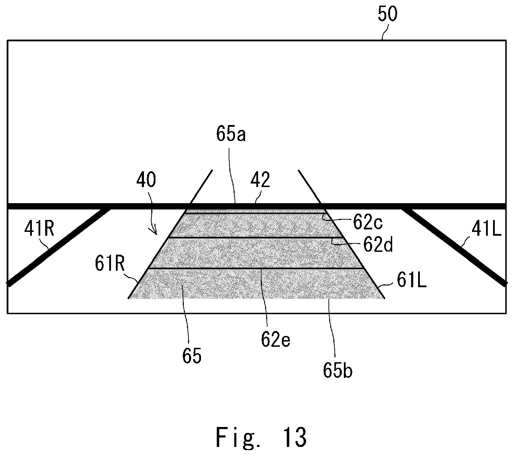

Fig. 13 shows a display video image when the vehicle travels further backward from the state shown in Fig. 12. Fig. 13 shows a display video image at the timing when the auxiliary line 62a and the auxiliary line 62b are not displayed, similar to the state shown in Fig. 7. Further, Fig. 13 shows a case in which the vehicle 1 travels backward at the threshold speed. The display video image generator 110 generates the display video image data in such a way that the size of the auxiliary area 65 gradually decreases with time.

Specifically, the display position of the deep-side end part 65a moves with time. That is, the display position of the deep-side end part 65a moves to the lower side on the display screen (the front side of the travelling direction) with time. Further, the display position of the front-side end part 65b is substantially constant. Accordingly, the size of the auxiliary area 65 shown in Fig. 13 is smaller than the size of the auxiliary area 65 shown in Fig. 12.

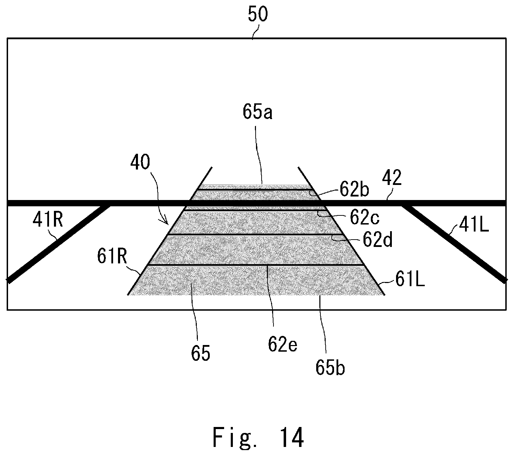

The moving speed of the display position of the deep-side end part 65a is set in accordance with the threshold speed. Specifically, when the backward travelling speed of the vehicle 1 coincides with the threshold speed, as shown in Fig. 13, the display position of the deep-side end part 65a coincides with the deep-side division line 42. Fig. 14 shows a display example in which the backward travelling speed of the vehicle 1 is faster than the threshold speed. When the backward travelling speed of the vehicle 1 is faster than the threshold speed, as shown in Fig. 14, the deep-side end part 65a is displayed above the deep-side division line 42. As shown in Fig. 14, the deep-side end part 65a exceeds the deep-side division line 42. In this example, the deep-side end part 65a is displayed above the auxiliary line 62b.

In other words, when the deep-side end part 65a is farther than the deep-side division line 42 (upper side on the display screen), the driver can recognize that the backward travelling speed is faster than the threshold speed. That is, when the auxiliary area 65 crosses the deep-side division line 42, the driver can recognize that the backward travelling speed is faster than the threshold speed. When the auxiliary area 65 is displayed in front of the deep-side division line 42, the driver can recognize that the backward travelling speed is lower than the threshold speed. When the deep-side end part 65a of the auxiliary area 65 coincides with the deep-side division line 42, the driver can recognize that the backward travelling speed is equal to the threshold speed. In this way, the driver can recognize that the backward travelling speed is fast and can therefore reduce the backward travelling speed. In other words, this can motivate the driver to drive at an appropriate backward travelling speed. In this way, by changing the display position of the deep-side end part 65a of the auxiliary area 65 with time, it is possible to support the driver so that the driver can travel at an appropriate speed.

As described above, the size of the auxiliary area 65 decreases with time. The display position of the deep-side end part 65a of the auxiliary area 65 is continuously changed between the auxiliary lines in association with the timing when the auxiliary lines 62 are deleted. In this way, the driver can recognize that he/she travels backward at an appropriate speed. When the backward travelling speed of the vehicle 1 is faster than the threshold speed, the auxiliary line 62 before the change in the display form is displayed above the deep-side division line 42. For example, as shown in Fig. 14, the auxiliary area 65 crosses the deep-side division line 42. Therefore, the driver can easily recognize that he/she travels backward at a speed faster than the threshold speed.

In this embodiment, the predicted course line generator 109 serves as the superimposed data generator configured to generate the superimposed data indicating positions located away from the vehicle 1 by predetermined distances in the travelling direction of the vehicle. The superimposed data are the auxiliary lines 62, the auxiliary area 65, and the predicted course lines 61L and 61R. The display video image generator 110 generates the display video image data in such a way as that the display controller 120 causes the display unit 50 to display (b), where (b) is to display the superimposed data in such a way that the predetermined distance decreases with time. When (b) is displayed, the superimposed data is preferably two-dimensional auxiliary area 65. Instead, it may be a straight line extended in right and left arranged in a predetermined distance from the back end part of the vehicle 1. In this case, the display is performed in such a way that the straight line, which is the superimposed data, gradually approaches the vehicle 1. That is, the straight line, which is the superimposed data, moves in the display screen based on the speed in accordance with the threshold speed.

### (Fourth Embodiment)

In a fourth embodiment, similar to the third embodiment, the display video image generator 110 generates display video image data in which the auxiliary area 65 is superimposed on the video image data. This embodiment is different from the third embodiment in that the predicted course lines 61L and 61R are not displayed in this embodiment. That is, the predicted course line generator 109 serves as the superimposed data generator configured to generate the auxiliary lines 62 and the auxiliary area 65 as the superimposed data without generating the predicted course lines 61L and 61R. Since the basic operations and the configuration of the display control apparatus 100 are similar to those of the aforementioned embodiments, the descriptions thereof will be omitted.

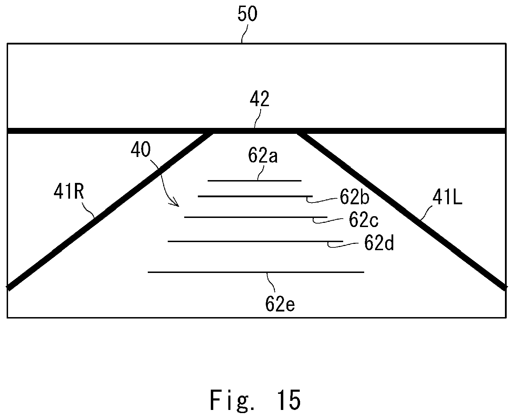

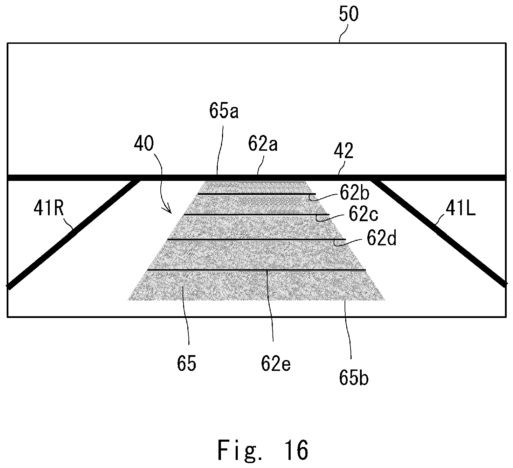

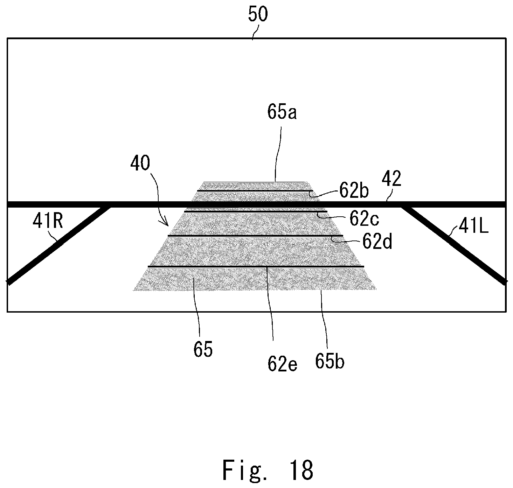

Figs. 15-18 are diagrams showing positional examples of the display screen according to this embodiment. Fig. 15 shows a display screen in a state that corresponds to Fig. 4. Fig. 16 shows a display screen in a state that corresponds to Fig. 6. Fig. 16 shows a display screen in a state that corresponds to Fig. 7. Fig. 18 shows a display screen in a state that corresponds to Fig. 8. Further, also in this embodiment, a display example in a case in which the vehicle 1 travels straight backward will be explained.

Since the auxiliary line 62a has not reached the deep-side division line 42 in Fig. 15, the auxiliary area 65 is not displayed. Since the predicted course lines 61L and 61R are not displayed in this embodiment, at the timing shown in Fig. 15, the display video image generator 110 generates the display video image data in which only the auxiliary lines 62 are superimposed on the video image data.

In the state shown in Fig. 16, the auxiliary line 62a has reached the deep-side division line 42. Therefore, the predicted course line generator 109 generates, besides the auxiliary lines 62, the auxiliary line 65 as the superimposed data. That is, using, as a trigger, the timing when the auxiliary line 62 and the deep-side division line 42 overlap each other, the predicted course line generator 109 generates the auxiliary area 65. The deep-side end part 65a of the auxiliary area 65 coincides with the deep-side division line 42. The width of the auxiliary area 65 in the right-left direction corresponds to the width of the vehicle 1.

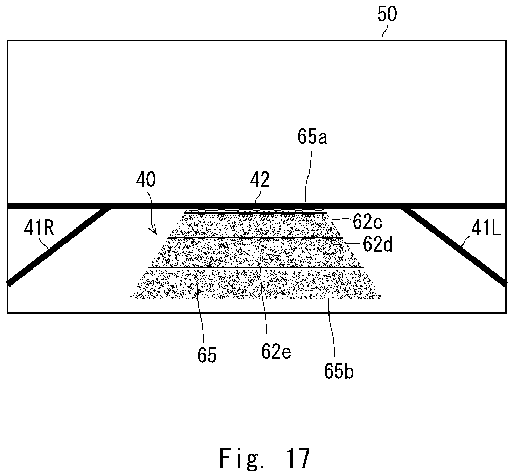

When the vehicle 1 travels further backward from the state shown in Fig. 16, the display screen shows the state shown in Fig. 17. Fig. 17 shows the display screen when the vehicle 1 travels backward at the threshold speed. In Fig. 17, similar to the situation shown in Fig. 13, the deep-side end part 65a of the auxiliary area 65 coincides with the deep-side division line 42.

When the vehicle 1 travels backward from the state shown in Fig. 16 at a speed faster than the threshold speed, the display screen shows the state shown in Fig. 18. Fig. 17 shows the display screen when the vehicle 1 travels backward at the threshold speed. In Fig. 18, similar to Fig. 13, the deep-side end part 65a of the auxiliary area 65 is on the deeper side than the deep-side division line 42. Therefore, the auxiliary area 65 is displayed so as to cross the deep-side division line 42. According to this display, the driver can recognize that the backward travelling speed is fast and can thus reduce the backward travelling speed, similar to the processing in the third embodiment.

While the predicted course line generator 109 generates not only the auxiliary area 65 but also the auxiliary lines 62 as the superimposed data in the third and fourth embodiments, only the auxiliary area 65 may be displayed as the superimposed data. The display video image generator 110 generates the display video image data in such a way that the display controller 120 causes the display unit 50 to display at least one of (a) and (b), where (a) is to display the superimposed data in such a way that the display forms of the plurality of respective pieces of superimposed data are changed sequentially from the far side of the vehicle at predetermined time intervals and (b) is to display the superimposed data (the auxiliary area 65) in such a way that the predetermined distance becomes smaller with time.

### (Other Embodiments)

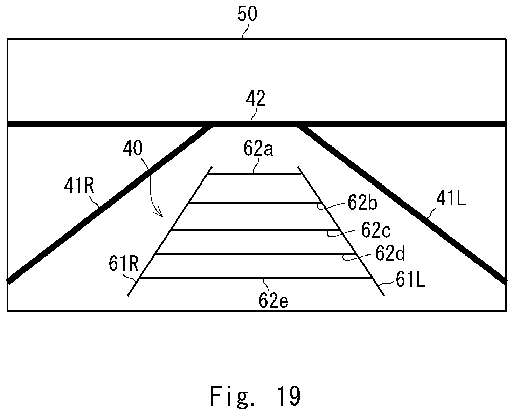

While the auxiliary lines 62 are generated in such a way that the intervals between the auxiliary lines 62 become constant on the road surface 90 in the first and second embodiments, the intervals between the plurality of auxiliary lines 62 may not be constant. As shown in Fig. 19, for example, the intervals between the auxiliary lines 62 may be made wider for the intervals between the auxiliary lines on the far side (deeper side) on the road surface 90. In this case, the display forms of the auxiliary lines 62 are changed at predetermined time intervals, whereby it is possible to provide a driving support to make the backward travelling speed slower as the vehicle 1 approaches the deep-side division line 42. In other words, the threshold speed becomes slower as the vehicle 1 approaches the deep-side division line 42. It is therefore possible to dynamically change the threshold speed. It is therefore possible to provide a driving support so that the vehicle 1 is parked while gradually reducing the backward travelling speed.

Alternatively, the display forms of the auxiliary lines 62 may be changed at time intervals in accordance with the intervals between the auxiliary lines 62 on the road surface 90. The timings when the display forms are changed may be set for each auxiliary line 62 in accordance with the intervals between the auxiliary lines 62 on the road surface 90. When, for example, the threshold speed is 1 m/sec and the intervals between the auxiliary lines 62 are 3 m, 2 m, and 1 m from the far side, the time intervals in which the display forms are changed are set to three seconds, two seconds, and one second. In this way, the time intervals in which the display forms are changed can be arbitrarily set in accordance with the threshold speed and the arrangement intervals between the auxiliary lines 62 on the road surface 90. That is, the time from the trigger timing to the timing when the display forms are changed can be adjusted as appropriate. In other words, it is possible to set the temporal pattern to change the display forms in accordance with the threshold speed and the arrangement intervals between the auxiliary lines 62 on the road surface 90.

When the intervals between the auxiliary lines 62 are constant, for example, the threshold speed can be changed by adjusting the time intervals in which the display forms are changed. By reducing the time intervals between the deeper-side auxiliary lines 62 at which the display forms are changed, the threshold speed can be dynamically reduced. It is therefore possible to provide a driving support so that the driver can park the vehicle 1 while gradually reducing the backward travelling speed. The threshold speed is thus set, whereby when the vehicle 1 travels backward while reducing the speed as the vehicle 1 approaches the deep-side division line 42, it is possible to cause the driver to appropriately recognize the backward travelling speed. Further, since a wide-angle camera is used for the rear camera 2, even when the vehicle 1 is approaching the deep-side division line 42 at a constant backward travelling speed, it is possible that the backward travelling speed may seem to become faster as the vehicle 1 approaches the deep-side division line. Even in this state, the driver can recognize the backward travelling speed in such a way that the driver can travel backward with a sense of security.

When the vehicle 1 stops for a while during the parking, the trigger timing and the timings when the display forms of the auxiliary lines 62 are changed are preferably reset once. That is, when the vehicle 1 stops for a while, even when the backward travelling speed exceeds the threshold speed, the auxiliary lines 62 are deleted sufficiently before it reaches the deep-side division line 42. Therefore, it is preferable to re-set the trigger timing and the timings when the display forms are changed.

Further, the program for executing the aforementioned display control method can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magnetooptical disks), CD-Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). The program(s) may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

### Industrial Applicability

The present application is applicable to the display control apparatus configured to generate the display video image data based on the video image data acquired by the camera.

### Reference Signs List

- 1: VEHICLE
- 2: REAR CAMERA
- 50: DISPLAY UNIT
- 40: PARKING SECTION
- 41L, 41: RLATERAL-SIDE DIVISION LINE
- 42: DEEP-SIDE DIVISION LINE
- 61L, 61: RPREDICTED COURSE LINE
- 62: AUXILIARY LINE
- 65: AUXILIARY AREA
- 100: DISPLAY CONTROL APPARATUS
- 101: BACKWARD OPERATION DETECTION UNIT
- 102: BACKWARD MOTION DETECTION UNIT
- 104: STEERING ANGLE INFORMATION ACQUISITION UNIT
- 106: VIDEO IMAGE DATA ACQUISITION UNIT
- 107: EXTRACTION UNIT
- 109: PREDICTED COURSE LINE GENERATOR
- 110: DISPLAY VIDEO IMAGE GENERATOR
- 120: DISPLAY CONTROLLER

## Claims

1. A display control apparatus comprising:
a video image data acquisition unit (106) configured to acquire video image data from a camera that captures an image of a travelling direction of a vehicle;
a superimposed data generator (109) configured to generate, based on a travelling operation of the vehicle, superimposed data indicating a position located away from the vehicle by a predetermined distance in the travelling direction of the vehicle;
a display video image generator (110) configured to generate display video image data in which the superimposed data is superimposed on the video image data; and
a display controller (120) configured to cause a display unit to display a video image by the display video image data generated by the display video image generator (110),
wherein
the display video image generator (110) generates the display video image data in such a way that the display controller (120) causes the display unit to display the superimposed data in such a way that display forms of the plurality of pieces of respective superimposed data are changed sequentially from a far side of the vehicle at a predetermined time interval,
wherein:
the display control apparatus generates a plurality of auxiliary lines indicating distances from the vehicle in the travelling direction of the vehicle as the plurality of pieces of superimposed data;
the display video image generator (110) generates the display video image data in such a way as to sequentially change the display forms at a predetermined time interval from the auxiliary line on a far side with respect to the travelling direction of the vehicle;
the display control apparatus comprises an extraction unit configured to extract a deep-side division line that corresponds to a deep-side border of a parking section from the video image data; and
the display video image generator (110) generates the display video image data in such a way as to change the display forms from the auxiliary line on the far side using, as a trigger timing, a timing when an auxiliary line among the plurality of auxiliary lines that is arranged on a far side of the vehicle with respect to the travelling direction of the vehicle has reached a position that corresponds to the deep-side division line.

2. The display control apparatus according to Claim 1, wherein the display video image data displays, when an auxiliary line before the display form is changed has exceeded the deep-side division line, the auxiliary line before the display form is changed in an emphasized manner.

3. The display control apparatus according to Claim 1 or 2, wherein the display video image generator (110) generates the display video image data in such a way as to change the display form from the auxiliary line on the far side at a constant time interval.

4. The display control apparatus according to any one of Claims 1 to 3, wherein the display video image generator generates the display video image data in such a way that the time intervals at which the display forms are changed become longer as the distances from the auxiliary lines that are displayed to the vehicle decrease.

5. The display control apparatus according to any one of Claims 1 to 4, wherein the superimposed data generator (109) generates the plurality of auxiliary lines in such a way that the intervals between the plurality of auxiliary lines become equal on a road surface.

6. The display control apparatus according to any one of Claims 1 to 5, wherein the superimposed data generator (109) generates the plurality of auxiliary lines in such a way that the intervals between the plurality of auxiliary lines become wider on a road surface as the distances from the auxiliary lines to the vehicle increase.

7. A display control method comprising the steps of:
acquiring video image data from a camera that captures an image of a travelling direction of a vehicle;
generating, based on a travelling operation of the vehicle, superimposed data indicating a position located away from the vehicle by a predetermined distance in the travelling direction of the vehicle;
generating display video image data in which the superimposed data is superimposed on the video image data; and
displaying a video image by the display video image data on a display unit, wherein
the display video image data is generated in such a way that the display unit displays the superimposed data in such a way that display forms of the plurality of pieces of respective superimposed data are changed sequentially from a far side of the vehicle at a predetermined time interval,
wherein:
a plurality of auxiliary lines indicating distances from the vehicle in the travelling direction of the vehicle are generated as the plurality of pieces of superimposed data;
the display video image data are generated in such a way as to sequentially change the display forms at a predetermined time interval from the auxiliary line on a far side with respect to the travelling direction of the vehicle;
the display control method comprises extracting a deep-side division line that corresponds to a deep-side border of a parking section from the video image data; and
the display video image data is generated in such a way as to change the display forms from the auxiliary line on the far side using, as a trigger timing, a timing when an auxiliary line among the plurality of auxiliary lines that is arranged on a far side of the vehicle with respect to the travelling direction of the vehicle has reached a position that corresponds to the deep-side division line.

8. A program for causing a computer to execute the following steps of:
acquiring video image data from a camera that captures an image of a travelling direction of a vehicle;
generating, based on a travelling operation of the vehicle, superimposed data indicating a position located away from the vehicle by a predetermined distance in the travelling direction of the vehicle;
generating display video image data in which the superimposed data is superimposed on the video image data; and
displaying a video image by the display video image data on a display unit, wherein
the display video image data is generated in such a way that the display unit displays the superimposed data in such a way that display forms of the plurality of pieces of respective superimposed data are changed sequentially from a far side of the vehicle at a predetermined time interval,
wherein:
a plurality of auxiliary lines indicating distances from the vehicle in the travelling direction of the vehicle are generated as the plurality of pieces of superimposed data;
the display video image data are generated in such a way as to sequentially change the display forms at a predetermined time interval from the auxiliary line on a far side with respect to the travelling direction of the vehicle;
the computer to execute a step of extracting a deep-side division line that corresponds to a deep-side border of a parking section from the video image data; and
the display video image data is generated in such a way as to change the display forms from the auxiliary line on the far side using, as a trigger timing, a timing when an auxiliary line among the plurality of auxiliary lines that is arranged on a far side of the vehicle with respect to the travelling direction of the vehicle has reached a position that corresponds to the deep-side division line.

## Patentansprüche

1. Anzeigesteuervorrichtung, die Folgendes umfasst:
eine Videobilddatenerfassungseinheit (106), die konfiguriert ist, um Videobilddaten von einer Kamera, die ein Bild einer Fahrtrichtung eines Fahrzeugs aufnimmt, zu erfassen;
einen Überlagerungsdatengenerator (109), der konfiguriert ist, um auf der Grundlage eines Fahrtablaufs des Fahrzeugs Überlagerungsdaten zu erzeugen, die eine Position angeben, die um einen vorbestimmten Abstand in Fahrtrichtung des Fahrzeugs von dem Fahrzeug entfernt ist;
einen Anzeigevideobildgenerator (110), der konfiguriert ist, um Anzeigevideobilddaten zu erzeugen, bei denen die Überlagerungsdaten auf die Videobilddaten überlagert werden; und
eine Anzeigesteuerung (120), die konfiguriert ist, um eine Anzeigeeinheit zu veranlassen, ein Videobild durch die vom Anzeigevideobildgenerator (110) erzeugten Anzeigevideobilddaten anzuzeigen, wobei der Anzeigevideobildgenerator (110) die Anzeigevideobilddaten so erzeugt, dass die Anzeigesteuerung (120) die Anzeigeeinheit veranlasst, die Überlagerungsdaten so anzuzeigen, dass die Anzeigeformen der mehreren Stücke der jeweiligen Überlagerungsdaten nacheinander von einer fernen Seite des Fahrzeugs in einem vorbestimmten Zeitintervall geändert werden, wobei:
die Anzeigesteuervorrichtung mehrere Hilfslinien erzeugt, die die Abstände vom Fahrzeug in Fahrtrichtung des Fahrzeugs als mehrere Stücke von Überlagerungsdaten anzeigen;
der Anzeigevideobildgenerator (110) die Anzeigevideobilddaten so erzeugt, dass die Anzeigeformen in einem vorbestimmten Zeitintervall von der Hilfslinie auf einer in Bezug auf die Fahrtrichtung des Fahrzeugs fernen Seite nacheinander geändert werden;
die Anzeigesteuervorrichtung eine Extraktionseinheit umfasst, die konfiguriert ist, um aus den Videobilddaten eine tiefseitige Teilungslinie zu extrahieren, die einer tiefseitigen Begrenzung eines Parkabschnitts entspricht; und
der Anzeigevideobildgenerator (110) die Anzeigevideobilddaten so erzeugt, dass die Anzeigeformen von der Hilfslinie auf der fernen Seite geändert werden, wobei als Auslösezeitpunkt ein Zeitpunkt verwendet wird, zu dem eine Hilfslinie unter den mehreren Hilfslinien, die auf einer fernen Seite des Fahrzeugs in Bezug auf die Fahrtrichtung des Fahrzeugs angeordnet ist, eine Position erreicht hat, die der tiefseitigen Teilungslinie entspricht.

2. Anzeigesteuervorrichtung nach Anspruch 1, wobei die Anzeigevideobilddaten, wenn eine Hilfslinie vor der Änderung der Anzeigeform die tiefseitige Teilungslinie überschritten hat, die Hilfslinie vor der Änderung der Anzeigeform in einer hervorgehobenen Weise anzeigen.

3. Anzeigesteuervorrichtung nach Anspruch 1 oder 2, wobei der Anzeigevideobildgenerator (110) die Anzeigevideobilddaten so erzeugt, dass die Anzeigeform von der Hilfslinie auf der fernen Seite in einem konstanten Zeitintervall geändert wird.

4. Anzeigesteuervorrichtung nach einem der Ansprüche 1 bis 3, wobei der Anzeigevideobildgenerator die Anzeigevideobilddaten so erzeugt, dass die Zeitintervalle, in denen die Anzeigeformen geändert werden, länger werden, wenn die Abstände von den Hilfslinien, die dem Fahrzeug angezeigt werden, abnehmen.

5. Anzeigesteuervorrichtung nach einem der Ansprüche 1 bis 4, wobei der Überlagerungsdatengenerator (109) die mehreren Hilfslinien so erzeugt, dass die Intervalle zwischen den mehreren Hilfslinien auf einer Straßenoberfläche gleich werden.

6. Anzeigesteuervorrichtung nach einem der Ansprüche 1 bis 5, wobei der Überlagerungsdatengenerator (109) die mehreren Hilfslinien so erzeugt, dass die Intervalle zwischen den mehreren Hilfslinien auf einer Straßenoberfläche mit zunehmendem Abstand von den Hilfslinien zum Fahrzeug breiter werden.

7. Anzeigesteuerverfahren, das die folgenden Schritte umfasst:
Erfassen von Videobilddaten von einer Kamera, die ein Bild der Fahrtrichtung eines Fahrzeugs aufnimmt;
Erzeugen, auf der Grundlage eines Fahrtablaufs des Fahrzeugs, von Überlagerungsdaten, die eine Position angeben, die in Fahrtrichtung des Fahrzeugs um einen vorbestimmten Abstand vom Fahrzeug entfernt ist;
Erzeugen von Anzeigevideobilddaten, bei denen die Überlagerungsdaten auf die Videobilddaten überlagert werden; und
Anzeigen eines Videobildes durch die Anzeigevideobilddaten auf einer Anzeigeeinheit, wobei die Anzeigevideobilddaten so erzeugt werden, dass die Anzeigeeinheit die Überlagerungsdaten so anzeigt, dass die Anzeigeformen der mehreren Stücke der jeweiligen Überlagerungsdaten nacheinander von einer fernen Seite des Fahrzeugs in einem vorbestimmten Zeitintervall geändert werden, wobei:
mehrere Hilfslinien, die die Abstände vom Fahrzeug in Fahrtrichtung des Fahrzeugs angeben, als mehrere Stücke von Überlagerungsdaten erzeugt werden;
die Anzeigevideobilddaten so erzeugt werden, dass die Anzeigeformen in einem vorbestimmten Zeitintervall von der Hilfslinie auf einer in Bezug auf die Fahrtrichtung des Fahrzeugs fernen Seite nacheinander geändert werden;
das Anzeigesteuerverfahren das Extrahieren einer tiefseitigen Teilungslinie, die einer tiefseitigen Begrenzung eines Parkabschnitts entspricht, aus den Videobilddaten umfasst; und
die Anzeigevideobilddaten so erzeugt werden, dass die Anzeigeformen von der Hilfslinie auf der fernen Seite geändert werden, wobei als Auslösezeitpunkt ein Zeitpunkt verwendet wird, zu dem eine Hilfslinie unter den mehreren Hilfslinien, die auf einer fernen Seite des Fahrzeugs in Bezug auf die Fahrtrichtung des Fahrzeugs angeordnet ist, eine Position erreicht hat, die der seitentiefen Teilungslinie entspricht.

8. Programm, das einen Computer dazu veranlasst, die folgenden Schritte auszuführen:
Erfassen von Videobilddaten von einer Kamera, die ein Bild der Fahrtrichtung eines Fahrzeugs aufnimmt;
Erzeugen, auf der Grundlage eines Fahrtablaufs des Fahrzeugs, von Überlagerungsdaten, die eine Position angeben, die in Fahrtrichtung des Fahrzeugs um einen vorbestimmten Abstand vom Fahrzeug entfernt ist;
Erzeugen von Anzeigevideobilddaten, bei denen die Überlagerungsdaten an die Videobilddaten überlagert werden; und
Anzeigen eines Videobildes durch die Anzeigevideobilddaten auf einer Anzeigeeinheit, wobei die Anzeigevideobilddaten so erzeugt werden, dass die Anzeigeeinheit die Überlagerungsdaten so anzeigt, dass die Anzeigeformen der mehreren Stücke der jeweiligen Überlagerungsdaten nacheinander von einer fernen Seite des Fahrzeugs in einem vorbestimmten Zeitintervall geändert werden, wobei:
mehrere Hilfslinien, die die Abstände vom Fahrzeug in Fahrtrichtung des Fahrzeugs angeben, als mehrere Stücke von Überlagerungsdaten erzeugt werden;
die Anzeigevideobilddaten so erzeugt werden, dass die Anzeigeformen in einem vorbestimmten Zeitintervall von der Hilfslinie auf einer in Bezug auf die Fahrtrichtung des Fahrzeugs fernen Seite nacheinander geändert werden;
der Computer einen Schritt zum Extrahieren einer seitentiefen Teilungslinie, die einer seitentiefen Begrenzung eines Parkabschnitts entspricht, aus den Videobilddaten ausführt; und
die Anzeigevideobilddaten so erzeugt werden, dass die Anzeigeformen von der Hilfslinie auf der fernen Seite geändert werden, wobei als Auslösezeitpunkt ein Zeitpunkt verwendet wird, zu dem eine Hilfslinie unter den mehreren Hilfslinien, die auf einer fernen Seite des Fahrzeugs in Bezug auf die Fahrtrichtung des Fahrzeugs angeordnet ist, eine Position erreicht hat, die der seitentiefen Teilungslinie entspricht.

## Revendications

1. Appareil de commande d'affichage comprenant :
une unité d'acquisition de données d'image vidéo (106) conçue pour acquérir des données d'image vidéo à partir d'une caméra qui capture une image d'une direction de déplacement d'un véhicule ;
un générateur de données superposées (109) conçu pour générer, sur la base d'une opération de déplacement du véhicule, des données superposées indiquant une position éloignée du véhicule d'une distance prédéfinie dans la direction de déplacement du véhicule ;
un générateur d'image vidéo d'affichage (110) conçu pour générer des données d'image vidéo d'affichage dans lesquelles les données superposées sont superposées aux données d'image vidéo ; et
un dispositif de commande d'affichage (120) conçu pour amener une unité d'affichage à afficher une image vidéo grâce aux données d'image vidéo d'affichage générées par le générateur d'image vidéo d'affichage (110), le générateur d'image vidéo d'affichage (110) génère les données d'image vidéo d'affichage de telle manière que le dispositif de commande d'affichage (120) amène l'unité d'affichage à afficher les données superposées de telle manière que des formes d'affichage de la pluralité d'éléments de données superposées respectives soient modifiées séquentiellement à partir d'un côté éloigné du véhicule à un intervalle de temps prédéfini, dans lequel :
l'appareil de commande d'affichage génère une pluralité de lignes auxiliaires indiquant des distances à partir du véhicule dans la direction de déplacement du véhicule sous la forme de la pluralité d'éléments de données superposées ;
le générateur d'image vidéo d'affichage (110) génère les données d'image vidéo d'affichage de manière à modifier séquentiellement les formes d'affichage à un intervalle de temps prédéfini à partir de la ligne auxiliaire sur un côté éloigné par rapport à la direction de déplacement du véhicule ;
l'appareil de commande d'affichage comprend une unité d'extraction conçue pour extraire une ligne de division latérale profonde qui correspond à une bordure latérale profonde d'une section de stationnement à partir des données d'image vidéo ; et
le générateur d'image vidéo d'affichage (110) génère les données d'image vidéo d'affichage de manière à modifier les formes d'affichage de la ligne auxiliaire du côté éloigné en utilisant, comme synchronisation de déclenchement, une synchronisation au moment où une ligne auxiliaire, parmi la pluralité de lignes auxiliaires, qui est disposée sur un côté éloigné du véhicule par rapport à la direction de déplacement du véhicule, a atteint une position qui correspond à la ligne de division latérale profonde.

2. Appareil de commande d'affichage selon la revendication 1, dans lequel les données d'image vidéo d'affichage affichent, au moment où une ligne auxiliaire a dépassé la ligne de division latérale profonde avant la modification de la forme d'affichage, la ligne auxiliaire avec un contraste accru avant la modification de la forme d'affichage.

3. Appareil de commande d'affichage selon la revendication 1 ou 2, dans lequel le générateur d'image vidéo d'affichage (110) génère les données d'image vidéo d'affichage de manière à modifier la forme d'affichage à partir de la ligne auxiliaire du côté éloigné à un intervalle de temps constant.

4. Appareil de commande d'affichage selon l'une quelconque des revendications 1 à 3, dans lequel le générateur d'image vidéo d'affichage génère les données d'image vidéo d'affichage de telle manière que les intervalles de temps auxquels les formes d'affichage sont modifiées deviennent plus longs à mesure que les distances à partir des lignes auxiliaires affichées pour le véhicule diminuent.

5. Appareil de commande d'affichage selon l'une quelconque des revendications 1 à 4, dans lequel le générateur de données superposées (109) génère la pluralité de lignes auxiliaires de telle manière que les intervalles entre la pluralité de lignes auxiliaires deviennent égaux sur une surface de route.

6. Appareil de commande d'affichage selon l'une quelconque des revendications 1 à 5, dans lequel le générateur de données superposées (109) génère la pluralité de lignes auxiliaires de telle manière que les intervalles entre la pluralité de lignes auxiliaires deviennent plus larges sur une surface de route à mesure que les distances entre les lignes auxiliaires et le véhicule augmentent.

7. Procédé de commande d'affichage, comprenant les étapes :
d'acquisition de données d'image vidéo à partir d'une caméra qui capture une image d'une direction de déplacement d'un véhicule ;
de génération, sur la base d'une opération de déplacement du véhicule, de données superposées indiquant une position éloignée du véhicule d'une distance prédéfinie dans la direction de déplacement du véhicule ;
de génération de données d'image vidéo d'affichage dans lesquelles les données superposées sont superposées aux données d'image vidéo ; et
d'affichage d'une image vidéo grâce aux données d'image vidéo d'affichage sur une unité d'affichage, les données d'image vidéo d'affichage étant générées de telle manière que l'unité d'affichage affiche les données superposées de telle manière que les formes d'affichage de la pluralité d'éléments de données superposées respectives sont modifiées séquentiellement à partir d'un côté éloigné du véhicule à un intervalle de temps prédéfini, dans lequel :
une pluralité de lignes auxiliaires indiquant des distances à partir du véhicule dans la direction de déplacement du véhicule sont générées sous la forme de la pluralité d'éléments de données superposées ;
les données d'image vidéo d'affichage sont générées de manière à modifier séquentiellement les formes d'affichage à un intervalle de temps prédéfini à partir de la ligne auxiliaire d'un côté éloigné par rapport à la direction de déplacement du véhicule ;
le procédé de commande d'affichage comprend l'extraction d'une ligne de division latérale profonde qui correspond à une bordure latérale profonde d'une section de stationnement à partir des données d'image vidéo ; et
les données d'image vidéo d'affichage sont générées de manière à modifier les formes d'affichage de la ligne auxiliaire du côté éloigné en utilisant, comme synchronisation de déclenchement, une synchronisation au moment où une ligne auxiliaire, parmi la pluralité de lignes auxiliaires, qui est disposée sur un côté éloigné du véhicule par rapport à la direction de déplacement du véhicule a atteint une position qui correspond à la ligne de division latérale profonde.

8. Programme amenant un ordinateur à exécuter les étapes :
d'acquisition de données d'image vidéo à partir d'une caméra qui capture une image d'une direction de déplacement d'un véhicule ;
de génération, sur la base d'une opération de déplacement du véhicule, de données superposées indiquant une position éloignée du véhicule d'une distance prédéfinie dans la direction de déplacement du véhicule ;
de génération de données d'image vidéo d'affichage dans lesquelles les données superposées sont superposées aux données d'image vidéo ; et
d'affichage d'une image vidéo grâce aux données d'image vidéo d'affichage sur une unité d'affichage, les données d'image vidéo d'affichage étant générées de telle manière que l'unité d'affichage affiche les données superposées de telle manière que les formes d'affichage de la pluralité d'éléments de données superposées respectives sont modifiées séquentiellement à partir d'un côté éloigné du véhicule à un intervalle de temps prédéfini, dans lequel :
une pluralité de lignes auxiliaires indiquant des distances à partir du véhicule dans la direction de déplacement du véhicule sont générées sous la forme de la pluralité d'éléments de données superposées ;
les données d'image vidéo d'affichage sont générées de manière à modifier séquentiellement les formes d'affichage à un intervalle de temps prédéfini à partir de la ligne auxiliaire d'un côté éloigné par rapport à la direction de déplacement du véhicule ;
l'ordinateur permet d'exécuter une étape d'extraction d'une ligne de division latérale profonde qui correspond à une bordure latérale profonde d'une section de stationnement à partir des données d'image vidéo ; et
les données d'image vidéo d'affichage sont générées de manière à modifier les formes d'affichage de la ligne auxiliaire du côté éloigné en utilisant, comme synchronisation de déclenchement, une synchronisation au moment où une ligne auxiliaire, parmi la pluralité de lignes auxiliaires, qui est disposée sur un côté éloigné du véhicule par rapport à la direction de déplacement du véhicule a atteint une position qui correspond à la ligne de division latérale profonde.
